# EUROPEAN PATENT APPLICATION

(11) **EP 3 668 016 A1**
(43) Date of publication of application: **17.06.2020**
(21) Application number: 18211323.3
(22) Date of filing: 10.12.2018
(51) Int. Cl.: H04L 12/28, H04L 29/08

(54) **EDGE DEVICE, SYSTEM AND METHOD FOR COUPLING END DEVICES WITH A REMOTE SERVER**

(71) Applicant: Siemens Aktiengesellschaft, 80333 München (DE)
(72) Inventor: Milovanovic, Igor, 90491 Nürnberg (DE); Heindl, Elisabeth, 90556 Cadolzburg (DE); Kohler, Benjamin, 90419 Nürnberg (DE); Riedl, Wolfgang, 90443 Nürnberg (DE)

(57) **Abstract**

Coupling of multiple groups of end devices with a remote server, in particular a remote server of a cloud. The data transfer between the end devices and the remote server may be managed by a number of one or more virtual machines, wherein the virtual machines are realized by a processing device which is spatially located away from the site location of the end devices. The end devices may be grouped, for example according to their spatial location, and separate virtual machines may be provided in a processing device for managing the data transfer between the groups of end devices and one or more remote servers.

## Description

### Technical background

The present invention relates to an edge device for coupling a number of end devices with a remote server. The present invention further relates to a system and a method for coupling a number of end devices with a remote server.

### Background

Modern industrial applications, for example industrial automation or process control require the need of a combination of local and high-performance data-processing. For example, data analytics, scoring for machine learning algorithm or the like have to be performed. This data-processing may be performed with the benefits by remote servers of a cloud.

For this purpose, the end devices of an industrial application provide the process data through an industrial automation network with high Quality of Service aspects. However, the Quality of Service aspects of the industrial automation network usually are not compatible with the speed and the Quality of Service aspects of a wide area network which is used to connect industrial automation plants with remote servers of a cloud. Thus, additional edges devices are used for coupling a wide area network with an industrial automation network comprising multiple end devices.

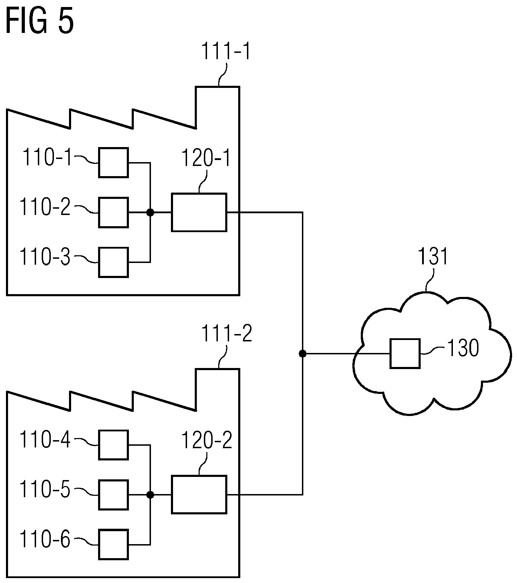

Fig. 5 shows a block diagram of industrial applications using edge devices as mentioned above. A first plant 111-1 comprises first end devices 110-1, 110-2, 110-3. The first end devices 110-1, 110-2, 110-3 are connected with a first edge device 120-1 by a first local area network. Accordingly, a second plant 111-2 comprises second end device 110-4, 110-5, 110-6 connected to a second edge device 120-2 by a second local area network. The first edge device 120-1 and the second edge device 120-2 are connected to remote servers of a cloud 130 by wide area network.

As can be seen from this example, separate edge devices 120-i are required for each plant 111-i.

In this context, one aspect of the present invention includes to provide an improved communication between end devices and a remote server. In particular, the present invention aims to provide an improved configuration of edge devices for coupling a number of end devices with a remote server.

### Summary of the invention

According to a first aspect, an edge device for coupling a number of end devices with a remote server is provided. The edge device comprises a first interface, a second interface and a processing device. The first interface is configured to communicatively couple the edge device with the number of end devices. The second interface is configured to communicatively couple the edge device with a remote server. The processing device comprises at least one virtual machine. Each virtual machine is configured to process data related to a predetermined group of end devices. In particular, the edge device is spatially located outside one or more site locations of the end devices. The edge device is also spatially located outside the remote server. In other words, the edge device is located at a spatial position which is different from the spatial positions of the premises of the end devices and the remote server.

According to a further aspect, a system for coupling a number of end devices with a remote server is provided. The system comprises a number of end devices. Each end device may be configured to control a technical process. The system further comprises an edge device according to the first aspect of the present invention.

According to still a further aspect, a method for coupling a number of end devices with a remote server is provided. The method comprises the steps of receiving process data from a number of end devices and forwarding the received process data from the end devices to a remote server. The receiving and forwarding is performed by an edge device. The method further comprises receiving control data from the remote server and forwarding the received control data to at least one end device. This receiving and forwarding is also performed by the edge device. The edge device comprises at least one virtual machine. Further, the edge device is spatially located outside site locations of the end devices and the remote server.

The present invention is based on the fact that modern industrial applications use benefits of cloud services. Cloud services, for example remote servers of a cloud, usually are available over wide area networks. However, the Quality of Service aspects of wide area networks which are used to connect industrial applications with a cloud are not compatible with the Quality of Service requirements of industrial automation networks, e.g. real time capability, high volume processing, speed, reliability, bandwidth, latency etc. Hence, edge devices are used for coupling the industrial automation network with a wide area network.

Furthermore, when connecting a local area network with a wide area network, the Quality of Service aspects of the last mile of wide area networks continuously increases. In particular, bandwidth, speed and latency of the last mile continuously improves over time.

It is therefore an idea of the present invention, to use a central processing device for providing edge device capabilities for multiple industrial applications. The central processing device may comprise multiple virtual machines, each virtual machine executing the operations of a "virtual" edge device. To provide edge device services for multiple industrial applications, in particular for multiple industrial applications located at different spatial positions, e.g. located at several industrial automation plants, the processing device with the virtual edge devices may be spatially located at a position outside the automation plants. Accordingly, multiple automation plants may be connected with the processing device comprising the multiple virtual edge devices by network connections fulfilling the required Quality of Service aspects.

By combining multiple edge devices as separate virtual edge devices in a single processing device, the efficiency can be improved. Furthermore, since no separate edge devices are required at each automation process, the overall costs can be reduced. A further benefit is that by providing the edge devices as virtual edge devices at an appropriate location, it is very easy to switch over from one virtual edge device to another virtual edge device. Accordingly, in case of maintenance or a failure, the downtime of an edge device service can be reduced.

The end devices may be any kind of devices in an industrial automation process. In particular, the end devices may be devices providing process data and/or devices which may receive control data for a desired operation. In particular, the end devices may be devices of a process which may be adapted over time. This adaption of the process may be performed, for example based on machine learning algorithms. Accordingly, the edge devices may forward process data from an edge device to the cloud or forward data from the cloud to an end device.

In the context of the present invention, an edge device may be considered as a device in between a communication path between the end devices and a remote server of a cloud. For example, an edge device may receive process data from the individual end devices and perform a preprocessing of the received process data. For this purpose, any appropriate preprocessing may be applicable. For example, the edge device may condense, compress or perform another processing of the process data in order to reduce the amount of data before forwarding the preprocessed data to the remote server of the cloud. For example, it may be possible to analyze the process data in order to eliminate same or similar data. For example, it may be possible to identify data which can be used for a machine learning algorithm and to forward only those data which are useful for an improvement of the machine learning parameters. However, any other appropriate preprocessing of the process data from the end devices may be also possible.

Furthermore, the edge device may receive data from a remote server of the cloud and provide appropriate data to the individual end devices based on the received data. For example, a remote server of the cloud may provide a set of data which is applicable to the industrial application, and the edge device may identify individual pieces of data which are applicable to the respective end devices. Furthermore, the edge device may receive data from the remote server of the cloud in a compressed form and the edge device may expand the received compressed data before forwarding data to the individual end devices. Furthermore, any other appropriate preprocessing of data received from a remote server of a cloud may be also possible.

As already mentioned above, an edge device according to the present invention may comprise a processing device which is executing one or more virtual machines for providing edge device services. Since the general approach of virtual machines is well-known, this is not discussed in more detail. For example, the processing device may execute multiple virtual machines in parallel, and each virtual machine may execute operations for providing services of an appropriate edge device related to the associated end devices.

The processing device for executing the virtual machines of the edge devices may be a stand-alone processing device, for example a separate computer with one or more processors for executing computational operations. However, it may be also possible that the processing device may be included in hardware of a communication network. For example, the processing device may be also a processing device of a gateway, router, base station or the like.

By running multiple virtual machines, each virtual machine executing an application for a virtual edge device, multiple industrial applications may be served. In particular, individual industrial applications may be located at different spatial locations. For example, end devices of multiple plants or at least industrial automation applications arranged at different parts of an industrial plant may be served by individual virtual machines of the processing device.

The first interface and the second interface may be any appropriate interface for coupling the processing device, in particular the respective virtual machine, with the related network. In particular, the first interface may be an interface for a connection with the end devices via a first network, in particular a local area network. For example, the end devices and the processing device with the first interface may communicate with each other via an industrial automation network having appropriate Quality of Service aspects, for example with respect to real time capability, bandwidth, high volume processing, speed, reliability, latency, etc. Furthermore, the second interface may couple the processing device, in particular the respective virtual edge device, with one or more remote servers, particular remote servers of a cloud, via an appropriate network, for example a wide area network. The Quality of Service requirements of the network between the second interface and the remote server may be lower than the Quality of Service requirements between the edge devices and the first interface of the processing device.

In a possible embodiment, each group of end devices comprises a number of end devices located at a predetermined site location. In particular, multiple end devices which are located at a predetermined site location or which are related to a common technical device such as an automation device in arrangement for controlling a technical process or the like may be grouped together. Accordingly, each group, in particular each group of end devices of a particular spatial location, may be associated to a corresponding virtual machine, in particular a service of a virtual edge device of the processing device. In this way, multiple virtual machines of a processing device may serve end devices related to different site locations, for example industrial plants, industrial automation devices etc.

In a possible embodiment, the edge device, in particular the edge device comprising the processing device, is located in a fog stratum with respect to the end devices. A fog stratum may be considered as the position in a communication path between the end devices and the remote server. Accordingly, the edge device is located somewhere between the end devices and the edge devices. However, the edge device is not located at the premises of the end devices or the remote server.

In a possible embodiment, the edge device can be located within the computing capabilities of a content delivery network. A content delivery network (CDN) is a system of geographically distributed servers that deliver pages and other Web content to a user, based on the geographic locations of the user. The servers which are embedded in this network have the capabilities to act as processing devices as well. In this case the first interface can be connected to the end devices by a dedicated network.Such networks may provide communication between the end device and the edge device with the virtual machines with a high Quality of Service aspects, in particular low latency, high bandwidth, high speed, high reliability etc.

In a possible embodiment, the first interface is connected to the end device by a wireless connection. In particular the wireless connection may comprise a 5G connection. However, it is understood that any other wireless connection, in particular any wireless connection providing high quality aspects such as low latency and high bandwidth may be possible, too. In this case, it may be even possible that the edge device with the processing device may be located in a base station of a wireless communication.

In a possible embodiment, the edge device may be configured to condense process data of the number of end devices before forwarding the condensed data to the remote server. Further, the edge device may be configured to preprocess control data from the remote server before forwarding the preprocessed control data to the end device. Accordingly, the edge device, in particular the virtual machine running on the processing device of the edge device may provide communication with the end devices by means of an appropriate network having high Quality of Service aspects. Furthermore, the communication between the edge device, in particular the virtual machine of the processing device and the remote server requires only less amount of data, and further aspects of the Quality of Service may be also lower. For example, process data from multiple end devices may be collected by the edge device and an appropriate preprocessing may be performed. For example, the amount of data may be reduced by compressing or eliminating some of the data or by any other scheme. Hence, only a subgroup of the process data from the end devices and/or compressed data are provided to the remote server via the second interface, for example by a wide area network. The other way around, the remote server may provide data for the end devices in a compressed form, and the virtual machine of the processing device of the edge device may extract or expand the data. Furthermore, any other preprocessing, for example a computation of particular control parameters based on the data received from the remote server may be also computed by the edge device. However, any other kind of preprocessing may be performed by the edge device, in particular the virtual machine of the processing device.

In a possible embodiment, the number of end devices which are coupled to the edge device, in particular the first interface of the edge device, by a network connection have predetermined Quality of Service requirements. In particular, the network connection may have a predetermined minimum bandwidth and/or a predetermined maximum latency. In this way, the communication between the end devices and the edge device may provide appropriate services for a reliable and proper operation of the end devices.

In a possible embodiment, the Quality of Service requirements of a connection between the edge device, in particular the second network interface, and the remote server is lower than the Quality of Service requirements between the edge device and the end devices. Hence, the communication between the edge device and the remote server may be performed by a data path providing only lower Quality of Service aspects such as real time capability, high volume processing, speed, reliability, bandwidth, latency or the like. For example, a wide area network connection between the edge device and the remote server may be used.

In a possible embodiment, the system for coupling the number of edge devices with the remote server may comprise at last one remote server. The remote server may be communicatively coupled with the second interface of the edge device. For example, the remote server may be a remote server of a cloud computing service. The remote server may comprise further devices such as a database or the like. For example, the remote server may perform a processing of data received from the end devices via the edge device and generate control data, for example a parametrization or the like before controlling or configuring the end devices.

In a possible embodiment, the remote server may be adapted to compute control parameters for controlling the end devices. However, the remote server may also perform any other appropriate processing of the data received from the end devices via the edge device. For example, a parametrization for configuring a process system such as an automation device or the like may be computed by the remote server. For example, the remote server may continuously compute data for controlling or configuring the end devices. Alternatively, the remote server may compute appropriate data each time further data are received from the edge device. However, it is understood that any other scheme for computing control data or parameters may be also possible.

In a possible embodiment, the remote server is adapted to compute parameters of a machine learning algorithm based on the data provided by the end devices. For example, the remote server may receive data related to a process executed or monitored by the end devices. Based on the received data, the remote server may perform a computation for generating a parametrization of an end device, generate control instructions or any other kind of configuration of an end device.

In a possible embodiment, the end device may comprise at least one of an automation device, a processing device, a control device, an Internet of Things device, actuators, sensors. However, any other appropriate end device may be also possible. For example, multiple end devices may be grouped together. In particular, multiple end devices located at a same site location, for example an industrial plant or the like may be grouped together. Accordingly, all data from this group of end devices may be forwarded to a virtual machine of the processing device of the edge device. In this way, the preprocessing of data from all end devices may be performed by one virtual machine which is located outside the site location with the group of end devices.

With the present invention it is therefore now possible to perform preprocessing for multiple industrial applications at a central processing device. This central processing device may be coupled to multiple groups of end devices. For each group of end device, the processing device may provide a separate virtual machine. Each virtual machine may run a virtual edge device for preprocessing a data exchange between the end devices and a cloud comprising at least one remote server. By locating the processing device with the multiple virtual edge devices separately from the groups of end devices, a centralized processing arrangement can be achieved. In particular, multiple groups of end devices may be coupled with virtual machines on a processing device by network connections fulfilling high Quality of Service aspects, in particular, bandwidth, latency etc. The centralization of edge devices by a processing device comprising multiple virtual edge devices provides improved efficiency, reliability, reduced costs and reduced downtime by switching over to another standby virtual machine.

### Brief description of the drawings

For a more complete understanding of the present invention and advantages thereof, reference is now made to the following description taken in conjunction with the accompanying drawings. The invention is explained in some more detail below using exemplary embodiments which are specified in the schematic figures of the drawings, in which:
- Fig. 1:: shows a block diagram of a system for coupling end devices with a remote server according to an embodiment of the present invention;
- Fig. 2:: shows a block diagram of an edge device according to an embodiment of the present invention;
- Fig. 3:: shows a block diagram of a system for coupling end devices with a remote server according to a further embodiment;
- Fig. 4:: shows a flow diagram of a method for coupling end devices with a remote server according to an embodiment; and
- Fig. 5:: shows a block diagram of an industrial application using a remote server in a conventional configuration.

The appended drawings are intended for providing further understanding of the embodiments of the invention. The drawings illustrate embodiments and in conjunction with the description, help to explain principles and concepts of the invention. Further embodiments and many of the advantages mentioned become apparent in view of the drawings. Elements in the drawings are not necessarily shown in scale.

### Description of embodiments

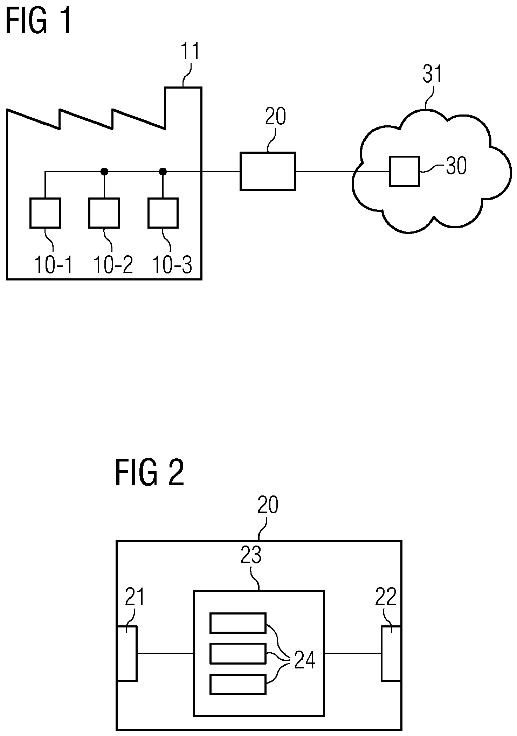

Fig. 1 shows a block diagram of a system for coupling end devices 10-i with a remote server 30 in a cloud 31. The end devices 10-i may be any kind of devices in an industrial application. For example, the end devices 10-i may be actuators, sensors or the like. An actuator may perform a specific operation based on received control commands or a specific configuration stored in the respective device. A sensor may provide, for example, measurement data such as a temperature, a pressure, a speed, an acceleration, etc. Furthermore, the end devices 10-i may comprise any other kind of device, for example a camera, an actuator, for example a drive of a convey belt, a power supply, or any other technical device for performing a desired operation or providing data of an industrial application. For example, end devices 10-i may be devices of an Internet of Things. A number of one or more end devices 10-i may be grouped together to a predetermined group. For example, all end devices 10-i relating to a specific industrial application, for example a production line, a technical process or the like may be grouped together. In particular, it may be also possible to group together all sensors of a particular application to a group. All actuators of a technical application may be grouped to another group of end devices 10-i. However, any other grouping of end devices 10-I may be possible, too. In particular, a group of end devices 10-i may relate to end devices of a particular site location, for example an industrial plant, a part of an industrial plant, or any particular room of a building. However, any other grouping of end devices 10-i may be also possible. The end devices 10-i may provide data which may be used as a basis for controlling or improving a technical process. For example, a remote server 30, in particular a remote server 30 of a cloud 31 may analyze data provided by edge devices 10-i. Based on the received data, remote server 30 may compute a parametrization or any other kind of control data for configuring or controlling at least some of the end devices 10-i. For example, remote server 30 may receive data from the end devices 10-i, apply a machine learning algorithm or the like and provide the results of the machine learning to the end devices 10-i.

In view of the high amount of data and/or the Quality of Service requirements in the industrial application network connecting the end devices 10-i, this internal network which connects the end devices 10-i might be not compatible with the Quality of Service aspects of a wide area network for connecting the remote server 30 of the cloud 31. Thus, an edge device 20 may be provided between the first network comprising the end devices 10-i and the second network for connecting the remote server 30. Accordingly, edge device 20 may receive data from the end devices 10-i. Edge device 20 may further preprocess the received data from some end devices 10-i and forward the preprocessed data to the remote server 30. For example, edge device 20 may compress the received data, eliminate some of the data, in particular redundant data from the end devices 10-i, or apply any other appropriate preprocessing of the data from the end devices 10-i. In this way, the amount of data which has to be transferred to the remote server 30 can be reduced. Furthermore, a preprocessing may comprise an analysis over time of the data from the end devices 10-i. Accordingly, the data exchange between the edge device 20 and the remote server 30 is less time sensitive. The other way around, edge device 20 may receive data from the remote server 30. In this case, edge device 20 may also perform a preprocessing of the data received from the remote server 30 and provide the processed data to the end devices 10-i. As already mentioned above, the data from the remote server 30 may comprise control or configuration data for controlling or configuring the end devices 10-i. For example, remote server 30 may compute an overall configuration based on previously received data from the end devices 10-i. In such a case, edge device 20 may receive the data from remote server 30, perform a preprocessing in order to determine individual parametrization, configuration or control data for the individual end devices 10-i. This data may be provided to the individual end devices 10-i. In particular, the preprocessed data may be provided by the edge device 20 to the end devices 10-i in an appropriate time scheme.

As can be further seen in Fig. 1, the edge device 20 is located outside the site location comprising the end devices 10-i. For example, edge device 20 may be arranged at a separate spatial location which is different from the spatial location comprising the end devices 10-i. In a possible example, end devices 10-i may be arranged inside a plant location, and edge device 20 may be located outside this plant location at a separate location. Such a location may be considered as a so-called fog stratum. In other words, the edge device 20 is located in the communication path between the end devices 10-i and the remote server 30 at a spatial position which is between the end devices 10-i and the remote server 30.

Furthermore, edge device 20 may operate multiple virtual machines, wherein each virtual machine may execute operations of an individual virtual edge device. For example, each virtual machine may provide services of a virtual edge device related to a specific group of end devices 10-i. In this way, edge device 20 may provide services of multiple conventional edge devices. This will be described in more detail below.

Fig. 2 shows a block diagram of an edge device 20 according to an embodiment. As can be seen in Fig. 2, the edge device 20 comprises a first interface 21 and a second interface 22. Further, the edge device 20 comprises at least one processing device 23. The processing device 23 may execute at least one virtual machine 24. The first interface 21 may be an interface for coupling the edge device 20 with end devices 10-i of one or more groups of end devices. Each group of end devices may be arranged at a different spatial site location 11. For example, each group of end devices may be arranged at a separate plant, separate areas of the plant or at least separate rooms.

The first interface 21 may be an interface to a communication network providing high Quality of Service. In particular, the network coupled to the first interface 21 may provide at least a predetermined first bandwidth and/or a maximum predetermined first latency. For example, the bandwidth may be at least 100 kilobits per second, or a gigabit per second or even more. The latency may be less than a few milliseconds, e.g. less than five, two or one millisecond or even lower. However, it is also possible to specify any other appropriate requirements for the Quality of Service of the network connected to the first interface 21.

The second interface 22 may be an interface for communicatively coupling the edge device 20, in particular the virtual machines 24 to a second network, e.g. a wide area network. Accordingly, the Quality of Service requirements regarding to the second network connected to the second interface 22 may be lower than the Quality of Service requirements of the first network connected to the first interface 21.

For example, the first interface 21 may be communicatively couple to the end devices 10-i by a wired connection, for example by copper cables or an optical fiber. Alternatively, it may be possible that at least a part of the communication link between the end devices 10-i and the edge device 20 with the virtual machines 24 may be a wireless communication link. For example, the wireless communication link may be a communication link according to 5G standard. However, it is understood that any other appropriate wired or wireless communication link providing the required Quality of Service aspects may be possible, too.

The virtual edge devices 24 may be realized, for example, by a stand-alone processing device, such as a computer or a workstation. However, it may be also possible to implement the virtual machines 24 for providing virtual edge devices in an already existing hardware of a network device in the communication link between the end devices 10-i and the remote server 30. For example, the virtual machines 24 may be implemented in the hardware of a gateway, a router or the hardware of a base station for a wireless communication link or by using the compute capabilities of a content delivery network. Any other appropriate hardware which can provide virtual machines for realizing virtual edge devices may be possible, too.

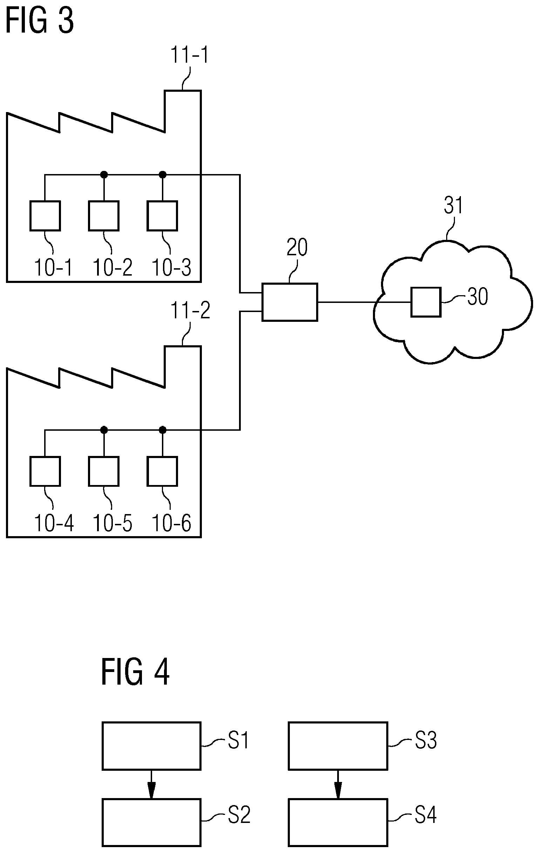

Fig. 3 shows a block diagram of a system for coupling a number of end devices 10-i with a remote server 30 according to a further embodiment. Since this embodiment mainly corresponds to the previously described embodiment according to Fig. 1 and the edge device 20 in Fig. 3 also mainly corresponds to the edge device 20 described in Fig. 2, the above description also applies to the embodiment according to Fig. 3. As can be seen in Fig. 3, the system may comprise multiple site locations 11-i. Each site location 11-i may comprise multiple end devices 10-i. For example, the end devices 10-i in each site location 11-i may be grouped together to a group of end devices. Each group of end devices 10-i may be communicatively coupled with a virtual machine 24-i in the processing device 23 of the edge device 20. Further, the virtual machines 24 may be communicatively coupled to one or more remote servers 30, in particular remote servers 30 of a cloud 31. Even though only a single remote server 30 is illustrated in Fig. 3, it may be also possible that the cloud comprises multiple remote servers 30. For example, a separate remote server 30 may be associated to each virtual machine 24 in edge device 20.

Fig. 4 shows a flow diagram of a method for coupling a number of end devices 10-i with a remote server 30, in particular a remote server 30 of a cloud 31. The method comprises a step S1 of receiving process data from a number of end devices 10-i. In particular, the process data may be received by an edge device 20. Edge device 20 may preprocess and forward the received process data from the end devices 10-i to a remote server 30 in a step S2. Furthermore, edge device 20 may receive control data or configuration data from the remote server 30 in step S3. The data from remote server 30 are preprocessed and forwarded to at least one of the number of end devices 10-i in step S4. The data transfer from the end devices 10-i to the remote server 30 and from the remote server 30 to the end devices 10-i may be performed simultaneously or in an altering manner.

In particular, the edge device 20 for managing the data transfer between the end devices 10-I and the remote server 30 may comprise at least one virtual machine 24. Furthermore, the edge device 20 may be spatially located outside site locations 11-i of the end devices 10-i and the remote server 30. In other words, the edge device 20 is located in fog stratum with respect to the end devices10-i.

End devices 10-I may be grouped to a number of one or more predetermined groups. In particular, end devices 10-i relating to a common technical process or a common device may be grouped together. Accordingly, a separate virtual machine 24 may be provided for each group of end devices 10-i.

Further to this, all operations which have been described above in connection with Figs. 1 to 3 may also apply to the method according to Fig. 4, and all operations which have been described in connection with Fig. 4 may also apply to the devices according to Figs. 1 to 3.

Summarizing, the present invention relates a coupling of multiple groups of end devices with a remote server, in particular a remote server of a cloud. The data transfer between the end devices and the remote server may be managed by a number of one or more virtual machines, wherein the virtual machines are realized by a processing device which is spatially located away from the site location of the end devices. The end devices may be grouped, for example according to their spatial location, and separate virtual machines may be provided in a processing device for managing the data transfer between the groups of end devices and one or more remote servers.

## Claims

1. Edge device (20) for coupling a number of end devices (10-i) with a remote server (30), the edge device (20) comprising:
a first interface (21) configured to communicatively couple the edge device (20) with the number of end devices (10-i);
a second interface (22) configured to communicatively couple the edge device (20) with a remote server (30);
a processing device (23) comprising at least one virtual machine (24), each virtual machine (24) is configured to process data related to a predetermined group of end devices (10-i),
wherein the edge device (20) is spatial located outside one or more site locations (11-i) of the end devices (10-i) and the remote server (30).

2. Edge device (20) according to claim 1, wherein each group of end devices (10-i) comprises a number of end devices (10-i) located at a predetermined site location (11-i).

3. Edge device (20) according to claim 1 or 2, wherein the edge device (20) is located in a fog stratum with respect to the end devices (10-i).

4. Edge device (20) according to any of claims 1 to 3, wherein the edge device (20) is located within the computing capabilities of a content delivery network.

5. Edge device (20) according to any of claims 1 to 3, wherein the first interface (21) is connected to the end devices (10-i) by wireless connections, in particular a 5G connection.

6. Edge device (20) according to any of claims 1 to 5, wherein the edge device (20) is configured to condense process data of the number of end devices (10-i) before forwarding the condensed data to the remote server (30) and/or to preprocess data received from the remote server (30) before forwarding the preprocessed data to the end devices (10-i).

7. System for coupling a number of edge devices (10-i) with a remote server (30), the system comprising:
a number of end devices (10-i), each end device (10-i) is configured to control a technical process;
an edge device (20) according to any of claim 1 to 6.

8. System according to claim 7, wherein the number of end devices (10-i) are coupled to the edge device (20) by a network connection having predetermined Quality of Service, QoS, requirements, in particular a predetermined minimum bandwidth and/or a predetermined maximum latency.

9. System according to claim 8, wherein QoS requirements of a connection between the edge device (20) and the remote server (30) are lower than the QoS requirements between the edge device (20) and the end devices (10-i).

10. System according to any of claims 7 to 9, comprising a remote server (30) communicatively coupled to the second interface (22) of the edge device (20).

11. System according to claim 10, wherein the remote server (30) is adapted to compute control parameters for controlling the end devices (10-i).

12. System according to claim 10 or 11, wherein the remote server (30) is adapted to compute parameters of a machine learning algorithm based on the data provided by the edge device.

13. System according to any of claims 7 to 12, wherein the end devices (10-i) comprise at least one of automation devices, processing devices, control devices, Internet of Things devices, actuators or sensors.

14. Method for coupling a number of end devices (10-i) with a remote server (30), the method comprising the steps of:
receiving (S1) process data from a number of end devices (10-i) by an edge device (20), and preprocessing and forwarding (S2) the preprocessed data from the number of end devices (10-i) to a remote server (30);
receiving (S3) control data from the remote server (30) by the edge device (20), and preprocessing and forwarding (S4) the preprocessed data from the remote server (30) to at least one of the number of end devices (10-i) ;
wherein the edge device (20) comprising at least one virtual machine (24), and
the edge device (20) is spatial located outside site locations (11-i) of the end devices (10-i) and the remote server (30).
